# EUROPÄISCHE PATENTSCHRIFT

(11) **EP 1 078 824 B1**
(45) Veröffentlichungstag und Bekanntmachung des Hinweises auf die Patenterteilung: **20.10.2004**
(21) Anmeldenummer: 00114381.7
(22) Anmeldetag: 05.07.2000
(51) Int. Cl.: B60R 21/20

(54) **Airbag-Lenkrad mit vom Luftsack getrennten Gasgeneratoren**
Airbag steering wheel with gas generators separated from the airbag
Volant à coussin gonflable avec générateurs de gaz séparés du coussin

(30) Priorität: 27.08.1999 DE 19940702
(43) Veröffentlichungstag der Anmeldung: 28.02.2001
(73) Patentinhaber: Bayerische Motoren Werke Aktiengesellschaft, 80809 München (DE)
(72) Erfinder: Eberle, Frank, 74821 Mosbach (DE)

(56) Entgegenhaltungen:
- US-A- 5 066 038
- PATENT ABSTRACTS OF JAPAN vol. 1998, no. 01, 30. Januar 1998 (1998-01-30) & JP 09 249088 A (TOYO TIRE &RUBBER CO LTD), 22. September 1997 (1997-09-22)

## Beschreibung

Die Erfindung betrifft ein Airbag-Lenkrad mit einer Nabe, die ein den gefalteten Luftsack enthaltendes Gehäuse aufnimmt.

Bei den bekannten Airbag-Lenkrädern ist die Nabe ziemlich großflächig, weil sie das komplette Airbagmodul aufnehmen muß, das sowohl den gefalteten Luftsack als auch den Gasgenerator enthält. Wegen des großen Einbauraums des Airbagmoduls sind die Möglichkeiten, das Styling des Lenkrades frei zu gestalten, stark eingeschränkt. Ein weiterer Nachteil des Standes der Technik besteht darin, daß bei einer Betätigung des Signalhorns die Masse des gesamten Airbagmoduls vom Fahrer bewegt werden muß. Nachteilhaft ist auch der Umstand, daß die Verschraubung des Airbagmoduls mit der Lenkradnabe von hinten her erfolgt. Die Verwendung eines Schraubers mit Drehmoment-Kontrolle wird dadurch erschwert, wenn nicht gänzlich verhindert. Die ordnungsgemäße Befestigung des Airbagmoduls läßt sich daher schlecht überwachen.

US 5 066 038 A beschreibt ein Airbag-Lenkrad gemäß den Oberbegriff des Anspruchs 1, wobei der Gasgenerator direkt an Luftsack befestigt ist.

JP 09 249088 A beschreit ein Airbag-Lenkrad gemäß den Oberbegriff des Anspruchs 1, weist aber auf eine räumliche Trennung des Gasgenerators vom Luftsack nicht hin.

Der Erfindung liegt die Aufgabe zugrunde, ein gattungsgemäßes Airbag-Lenkrad zu schaffen, bei dem die Nabe kleiner ausgebildet sein kann.

Erfindungsgemäß wird diese Aufgabe durch die Merkmale des Anspruchs 1. Da die Lenkradnabe lediglich den gefalteten Luftsack aufnehmen muß, kann sie mit einem verhältnismäßig kleinen Durchmesser ausgeführt werden, was dem Designer ein weites Gestaltungsfeld eröffnet.
Eine Weiterbildung der Erfindung ist durch den Einbau mehrerer Gasgeneratoren gekennzeichnet, die einzeln auslösbar sind. Dadurch wird eine gute Anpassung der Leistung und Aggressivität des Airbags an die Schwere eines möglichen Unfalls erreicht, und das Verletzungsrisiko für den Fahrer durch eine Auslösung des Airbagsystems bei geringer Aufprallgeschwindigkeit wird erheblich verringert. Bei dieser Ausführungsform ist es auch möglich, daß die Gasgeneratoren nicht gleichzeitig, sondern mit einem gewissen Zeitversatz nacheinander ausgelöst werden.

Bei der Erfindung ist vorgesehen, daß eine Abdeckung mit dem Gehäuse über einen Klemmring verschraubt ist, und daß die aus Gehäuse, Abdeckung und Klemmring bestehende Baueinheit mit der Nabe verschraubt ist. Da die Schrauben von vorne in die Nabe eingeschraubt werden, bereitet die Verwendung eines Schraubers mit Drehmoment-Kontrolle keine Schwierigkeiten, und die ordnungsgemäße Befestigung des Airbags kann leicht überwacht werden. Eine Weiterbildung dieser Ausführungsform sieht vor, daß sich der Klemmring am Gehäuse federnd abstützt und zum Schließen eines elektrischen Kontaktes für ein Signal betätigbar ist.

Ein bevorzugtes Ausführungsbeispiel der Erfindung ist in den Zeichnungen dargestellt. Es zeigt:

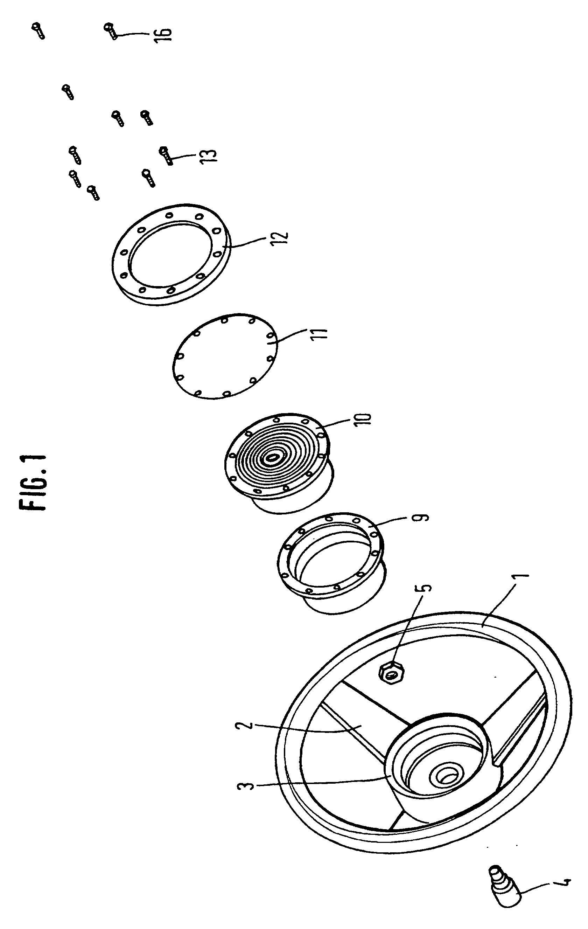

Fig. 1 eine perspektivische Explosionsdarstellung eines Airbag-Lenkrads, und

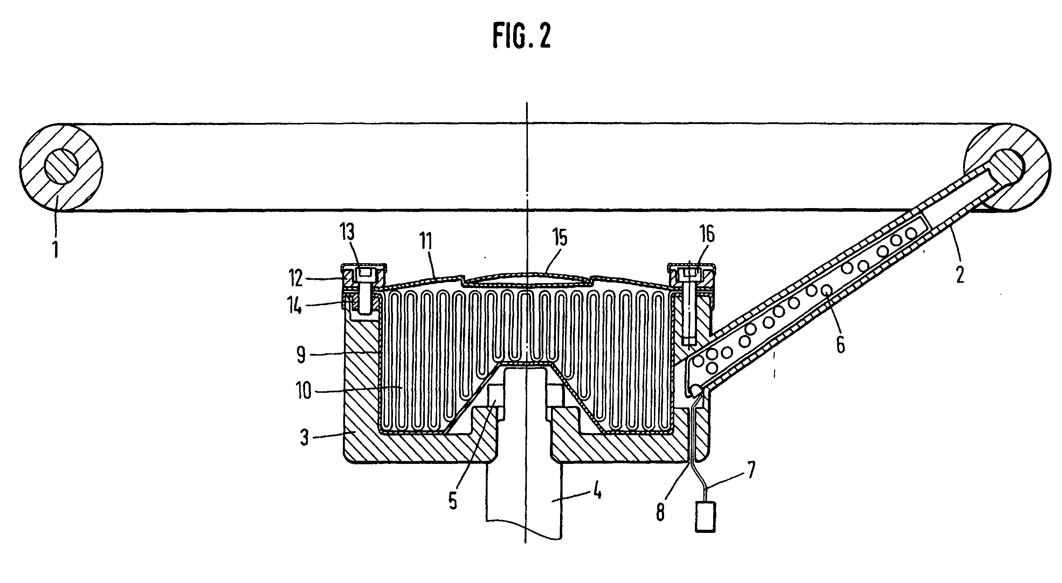

Fig. 2 einen Axialschnitt durch das Airbag-Lenkrad.

Das gezeigte Airbag-Lenkrad besteht aus einem Lenkradkranz 1, der über drei Lenkradspeichen 2 mit einer topfförmigen Nabe 3 verbunden ist. Der Boden der Nabe 3 weist in bekannter Weise eine mittige Bohrung auf, die mit einer Keilverzahnung versehen ist. Die Nabe 3 wird auf das mit einer korrespondierenden Keilverzahnung versehene obere Ende einer Lenkwelle 4 aufgesteckt und mit einer Mutter 5 gesichert. Mindestens eine der Lenkradspeichen 2 ist hohl ausgebildet, um einen Gasgenerator 6 aufzunehmen. Der Gasgenerator 6 besteht aus einem länglichen Gehäuse, das ein pyrotechnisches Treibmittel und eine elektrische Zündeinrichtung enthält. Mit der Zündeinrichtung des Gasgenerators 6 ist ein mit einem Steckkontakt versehenes Anschlußkabel 7 verbunden, das sich durch eine im Boden der Nabe 3 angeordnete Bohrung 8 nach außen erstreckt. In die Nabe 3 ist ein Gehäuse 9 eingesetzt, das einen gefalteten Luftsack 10 enthält. Der Luftsack 10 ist über eine seitliche Öffnung des Gehäuses 9 mit dem Gasgenerator 6 dicht verbunden. Das Gehäuse 9 hat einen Ringflansch zur Verbindung mit einer Abdeckung 11. Ein Klemmring 12 ist mit mehreren Schrauben 13 und Gegenmuttern 14 mit dem Flansch des Gehäuses 9 und der Abdeckung 11 verspannt. Die Abdeckung 11 ist mit einer zentralen Vertiefung versehen, in die eine Verzierung, beispielsweise ein Firmenemblem eingesetzt ist.

Das den Luftsack 10 enthaltende und mit der Abdeckung 11 verschlossene Gehäuse 9 bildet zusammen mit dem Gasgenerator 6 eine Baueinheit. Diese Baueinheit wird vom Kraftfahrzeughersteller üblicherweise von einem auf Airbageinrichtungen spezialisierten Zulieferbetrieb bezogen.

Bei der Montage des Airbags wird zunächst der Gasgenerator 6 von der Nabe 3 her in die hohle Lenkradspeiche 2 eingesetzt. Im Anschluß daran wird das Gehäuse 9 in die Nabe 3 eingesetzt, wobei das Anschlußkabel 7 durch die Bohrung 8 der Nabe hindurchgeführt wird. Das Anschlußkabel 7 wird mit einer (nicht gezeigten) Steuereinheit verbunden. Der Klemmring 12 ist neben den die Schrauben 13 aufnehmenden Bohrungen mit zusätzlichen Bohrungen versehen. Durch diese Bohrungen des Klemmrings 12 werden Schrauben 16 in entsprechende Axialbohrungen der Nabe 3 eingeschraubt, um das Gehäuse 9 mit der Nabe fest zu verbinden. Um eine einwandfreie Verbindung des Gehäuses 9 mit der Nabe 3 zu gewährleisten, sollte zum Anziehen der Schrauben 16 ein Schrauber mit Drehmoment-Kontrolle benutzt werden.

Bei einem Unfall wird der Gasgenerator 6 von der Steuereinheit gezündet, um den Luftsack 10 aufzublasen. Unter dem vom Luftsack 10 ausgeübten Druck wird die Abdeckung 11 aufgesprengt, so daß der Luftsack aus der Nabe 3 austreten und sich rasch füllen kann, um den Fahrer vor einem Aufprall zu schützen.

Selbstverständlich kann in jeder der drei Lenkradspeichen 2 ein Gasgenerator 6 angeordnet sein. In diesem Fall besteht die Möglichkeit, daß bei einem leichten Unfall mit schwachem Aufprall des Fahrzeugs nicht alle drei Gasgeneratoren, sondem nur zwei oder auch nur einer von ihnen gezündet wird. Es bestünde auch die Möglichkeit, die Gasgeneratoren in kurzen Zeitabständen auszulösen, um den Aufblasvorgang des Luftsackes zu optimieren.

Abweichend von dem in der Zeichnung dargestellten Ausführungsbeispiel könnte sich der Klemmring am Gehäuse federnd abstützen, so daß er zum Schließen eines elektrischen Kontaktes für ein Signalhorn betätigbar ist.

### Bezugszeichenliste:

- 1: Lenkradkranz
- 2: Lenkradspeichen
- 3: Nabe
- 4: Lenkwelle
- 5: Mutter
- 6: Gasgenerator
- 7: Anschlußkabel
- 8: Bohrung
- 9: Gehäuse
- 10: Luftsack
- 11: Abdeckung
- 12: Klemmring
- 13: Schrauben
- 14: Gegenmuttern
- 15: Verzierung
- 16: Schrauben

## Patentansprüche

1. Airbag-Lenkrad mit einer Nabe (3) und einem Lenkradkranz (1), der über mindestens eine Lenkradspeiche (2) mit der Nabe (3) verbunden ist, wobei die Nabe (3) einen gefalteten Luftsack (10) und die Lenkradspeiche (2) einen Gasgenerator (6) aufnimmt, **dadurch gekennzeichnet, daß** der oder die Gasgeneratoren (6) vom Luftsack (10) räumlich getrennt sind, daß der gefaltete Luftsack (10) in einem Gehäuse (9) angeordnet ist, daß eine Abdeckung (11) mit dem Gehäuse (9) über einen Klemmring (12) verschraubt ist, und daß die aus Gehäuse (9), Abdeckung (11) und Klemmring (12) bestehende Baueinheit mit der Nabe (3) verschraubt ist.

2. Airbag-Lenkrad nach Anspruch 1, **dadurch gekennzeichnet, daß** sich der Klemmring (12) am Gehäuse (9) federnd abstützt und zum Schließen eines elektrischen Kontaktes für ein Signalhorn betätigbar ist.

## Claims

1. An airbag/steering wheel with a hub (3) and a steering-wheel rim (1) connected by at least one spoke (2) to the hub (3), wherein the hub (3) contains a folded airbag (10) and the spoke (2) contains a gas generator (6), **characterised in that** the gas generator or generators (6) are spatially separated from the airbag (10), the folded airbag (10) is disposed in a casing (9), a cover (11) is screwed to the casing (9) via a clamping ring (12), and the structural unit comprising the casing (9), cover (10) and ring (12) is screwed to the hub (3).

2. An airbag/steering wheel in accordance with claim 1, **characterised in that** the clamping ring (12) resiliently bears on the casing (9) and can be actuated in order to close an electric contact for a horn.

## Revendications

1. Volant à coussin gonflable comportant un moyeu (3) et une couronne de volant (1) reliée au moyeu (3) par l'intermédiaire d'au moins une branche de volant (2), le moyeu (3) recevant un coussin gonflable (10) plié et la branche de volant (2) un générateur de gaz (6),
**caractérisé en ce que**
le ou les générateurs de gaz (6) sont spatialement séparés du coussin gonflable (10), le coussin gonflable (10) plié est placé dans un boîtier (9), un recouvrement (11) est vissé au boîtier (9) par l'intermédiaire d'une bague de serrage (12) et l'unité structurelle formée par le boîtier (9), le recouvrement (11) et la bague de serrage (12) est vissée au moyeu (3).

2. Volant à coussin gonflable selon la revendication 1,
**caractérisé en ce que**
la bague de serrage (12) s'appuie de façon élastique sur le boîtier (9) et on peut la manoeuvrer pour fermer un contact électrique destiné à un avertisseur sonore.
